# EUROPÄISCHE PATENTSCHRIFT

(11) **EP 3 901 006 B1**
(45) Veröffentlichungstag und Bekanntmachung des Hinweises auf die Patenterteilung: **29.04.2026**
(21) Anmeldenummer: 20204486.3
(22) Anmeldetag: 28.10.2020
(51) Int. Cl.: B62D 21/00

(54) **KRAFTFAHRZEUGBAUTEIL**
MOTOR VEHICLE COMPONENT
PIÈCE STRUCTURALE DE VÉHICULE AUTOMOBILE

(30) Priorität: 21.04.2020 DE 202020105963 U
(43) Veröffentlichungstag der Anmeldung: 27.10.2021
(73) Patentinhaber: Benteler Automobiltechnik GmbH, 33102 Paderborn (DE)
(72) Erfinder: Frost, Georg, 32839 Steinheim (DE)
(74) Vertreter: Ksoll, Peter

(56) Entgegenhaltungen:
- WO-A1-2020/017645
- WO-A1-2020/017647
- DE-A1- 102017 008 204
- US-A1- 2019 168 813

## Beschreibung

Die Erfindung betrifft ein Kraftfahrzeugbauteil gemäß den Merkmalen im Oberbegriff von Anspruch 1.

Bei Kraftfahrzeugbauteilen der erfindungsgemäßen Art handelt es sich insbesondere um Karosserie- oder Strukturbauteile von Kraftfahrzeugen wie A-, B-, oder C-Säulen, Schweller, Stoßfängerquerträger oder Seitenaufprallträger und ähnliche crashrelevante Formbauteile. Die Kraftfahrzeugbauteile weisen einen aus einem Stahlblech geformten Basiskörper auf. Der Basiskörper ist warmgeformt und formgehärtet oder besteht aus einem kaltgeformten Stahlblech. Solche Kraftfahrzeugbauteile unterliegen höchsten Anforderungen im Hinblick an ihre Festigkeit, so dass zu deren Herstellung hoch-, höher- und höchstfeste Stähle verwendet werden, insbesondere Mangan-Bor-Stähle. In diesem Zusammenhang zählt das Formhärten zum Stand der Technik. Formhärten ist ein Verfahren zum Warmumformen von Blechen, welches auch als Presshärten bezeichnet wird. Beim Formhärten wird ein Blech aus einer Mangan-Bor-Stahllegierung auf eine Temperatur oberhalb der spezifischen Austenitisierungstemperatur des Werkstoffs erwärmt, in ein Pressenwerkzeug eingelegt und zum Formbauteil warm umgeformt, wobei es während der Formgebung abkühlt. Im Pressenwerkzeug eingespannt werden die Formbauteile durch die Kühlung gehärtet. Solche Formbauteile zeichnen sich durch ihre hohen Festigkeitswerte aus. Insbesondere bei Formbauteilen aus Mangan-Bor-Stahlblechen lassen sich Festigkeiten über 1.200 MPa, insbesondere im Bereich von 1.300 MPa bis zu 2.000 MPa durch Formhärten erreichen.

Die Kraftfahrzeugbauteile der in Rede stehenden Art sollen aber auch eine gute Crashperformance bei hoher Steifigkeit gewährleisten. In diesem Zusammenhang ist man bestrebt solche Kraftfahrzeugbauteile belastungsgerecht auszulegen und zu gestalten.

Durch das europäische Patent EP 1 052 295 B1 zählt ein Verfahren zur Herstellung von Strukturbauteilen im Automobilbau zum Stand der Technik, wobei die Strukturbauteile zumindest bereichsweise eine hohe Festigkeit und eine Mindestdehnbarkeit von 5% bis 10% aufweisen sollen.

Die EP 2 185 735 B1 betrifft ein Verfahren zum Herstellen von gehärteten Profilbauteilen und offenbart ein gehärtetes Profilbauteil, welches über den Querschnitt mit Härtegradienten ausgebildet ist. Zur Einstellung der Härtegradienten über den Querschnitt des Bauteils werden freie Kanten angeordnet, wobei Größe, Art und Ausdehnung der Kanten auf einen gewünschten Härtegrad und/oder Härtegradienten abgestimmt angeordnet werden. Die Kanten können durch Ausnehmungen in Form von Löchern gebildet sein.

Die EP 1 180 470 B1 betrifft eine B-Säule, die einen weichen unteren Teil aufweist und eine kontrollierte Art der Verformung fördert.

Aus der US 6,820,924 B2 ist eine B-Säule bekannt, die im unteren Bereich zwei schmale weiche Bänder, sogenannte Crash Trigger, aufweist.

Im Umfang der DE 10 2011 011 320 A1 zählt eine Fahrzeugkarosserie-Komponente zum Stand der Technik. Diese Komponente umfasst mindestens ein erstes und ein zweites Strukturelement die durch ein Paneel-Element miteinander verbunden sind, wobei das Paneel-Element zumindest teilweise transparent ist und eine perforierte Struktur umfasst bzw. ein perforiertes Metallblech ist. Diese Ausgestaltung erfolgt jedoch mit dem Ziel, das Sichtfeld des Fahrzeugfahrers zu verbessern.

DE-A 10 2017 008204 bezieht sich auf eine Fahrzeugkarosseriestruktur umfassend Verformungsabschnitte mit mehreren kreisförmigen Öffnungen, bei ungefähr konstanten Intervallen ausgebildet.

Der Erfindung liegt ausgehend vom Stand der Technik die Aufgabe zu Grunde, ein für den Lastfall funktional verbessertes Kraftfahrzeugbauteil zu schaffen, welches ein höheres Absorptionsvermögen für kinetische Energie bei Reduktion von Zugspannungslasten besitzt.

Die Lösung dieser Aufgabe besteht nach der Erfindung in einem Kraftfahrzeugbauteil gemäß Anspruch 1.

Vorteilhafte Ausgestaltungen und Weiterbildungen des erfindungsgemäßen Kraftfahrzeugbauteils sind Gegenstand der abhängigen Ansprüche.

Das Kraftfahrzeugbauteil besitzt einen formgehärteten Basiskörper aus einem härtbaren oder gehärteten Stahlblech, insbesondere einen Mangan-Bor-Stahlblech oder kaltgeformten Basiskörper aus einem gehärteten Stahlblech, insbesondere einem martensitischen Stahl. Der Basiskörper weist einen mit Löchern versehenen Flächenabschnitt auf. Erfindungsgemäß besitzt der Flächenabschnitt eine Zugfestigkeit Rm von größer oder gleich (≥) 1.250 MPa. Die maximale Zugfestigkeit Rm in diesem Flächenabschnitt beträgt 2.100 MPa. In diesem Flächenabschnitt ist ein Lochmuster aus mindestens drei Löchern vorgesehen, welches eine Deformationseinflusszone bildet, wobei erfindungsgemäß der Flächenanteil der Löcher im Flächenabschnitt zwischen 7% und 60% beträgt und die Löcher einen Durchmesser bis zu 30 mm besitzen. Der Durchmesserbereich schließt alle Durchmesser ein. Insbesondere besitzen die Löcher Durchmesser zwischen oder 3 mm und 30 mm, vorzugsweise zwischen 5 mm und 20 mm.

Auch Langlöcher oder ovale Löcher sind möglich. Diese haben eine maximale Länge von 30 mm. Ansonsten bezieht sich die Angabe des Durchmessers bei unrunden Löchern stets auf das kleinste Achsmaß.

Bei den erfindungsgemäßen Kraftfahrzeugbauteilen handelt es sich insbesondere um Karosserie- oder Strukturbauteile von Kraftfahrzeugen die einen, zumindest bereichsweise, warmumgeformten und gehärteten Basiskörper besitzen. Am kaltgeformten oder formgehärteten Basiskörper können weitere Bauteilkomponenten später gefügt oder angebaut sein. Vor dem Formhärten bzw. nach der Formgebung kann die Steifigkeit des Basiskörpers lokal durch ein Verstärkungsblech oder Kunststoffeinsatz weiter verbessert werden.

Durch die erfindungsgemäße Ausgestaltung des Kraftfahrzeugbauteils wird dessen Fähigkeit zur Aufnahme und Umwandlung von kinetischer Energie gesteigert. Dies resultiert aus dem durch die Deformationseinflusszone verwirklichten größeren Intrusions- bzw. Formänderungsweg, bevor es zu einem kritischen Riss bzw. Versagen kommt, und zwar ohne dass die spezifische Zugfestigkeit bzw. Härte herabgesetzt werden muss. Wesentlich hierzu trägt des Weiteren die geminderte Rissempfindlichkeit der Formbauteile bzw. des Basiskörpers bei, der durch ein durch das Lochmuster bewirktes Teilen/Gabeln von Zugspannungslasten an den Grenzflächen der Lochränder bewirkt wird.

Die durch das Lochmuster gebildete Deformationseinflusszone in dem Flächenabschnitt führt des Weiteren zu einem Ausgleichen bzw. Zerstreuen von Zugspannungslasten durch ein vielfaches Gabeln der Teil-Zugspannungen in dem Bereich aus mindestens drei einzelnen Löchern.

Schließlich wird auch eine Gewichtsverbesserung bzw. -reduzierung der Kraftfahrzeugbauteile erreicht, und zwar durch die Löcher selber. Es ist auch möglich, Stege zwischen einzelnen Löchern im Lochmuster zu entfernen.

Ein erfindungsgemäßes Kraftfahrzeugbauteil ist funktional verbessert und weist ein hohes Absorptionsvermögen zur Aufnahme bzw. Umwandlung von kinetischer Energie bei einer Reduktion von Zugspannungslasten auf. Dies ist im Lastfall vorteilhaft, insbesondere bei einem aus einem Anprall resultierenden Lastfall.

Das Lochmuster und die durch das Lochmuster gestaltete Deformationseinflusszone ist so ausgelegt, dass im Lastfall auftretende Kräfte, insbesondere Zugkräfte, an den Grenzflächen, d.h. an den Lochrändern, geteilt und in Zugspannungspfade aufgegabelt werden.

Die Deformationseinflusszone steigert die Energieaufnahmefähigkeit durch die örtliche Erhöhung der Streckbarkeit, Umformbarkeit und der Formänderungsgrade.

Darüber hinaus wird ein Risswachstum begrenzt bzw. die Rissausbreitung gesteuert, wodurch eine Steigerung des Verformungsvermögens in Folge vom örtlichen Mindern der Zugspannungen einhergeht. Dies wird durch ein Zusammenwirken der Löcher des Lochmusters in der Deformationseinflusszone bewirkt, die als Entlastungszonen fungieren.

Die erfindungsgemäße Ausgestaltung ermöglicht des Weiteren Kraftfahrzeugbauteile dergestalt auszulegen, dass eine Steifigkeitsänderung über deren Längs- und/oder Querverlauf sprunghaft bzw. stufenförmig möglich ist und zwar bei Kraftfahrzeugbauteilen mit formgehärteten Basiskörpern aus einem Stahlblech von gleichmäßiger Dicke und gleichmäßigem Festigkeitsverlauf.

Weiterhin können durch die Deformationseinflusszonen Sollknickstellen im Kraftfahrzeugbauteil gebildet sein. Die Deformationseinflusszonen können ein selektives oder gestaffeltes Kollabieren des Bauteils bewirken. Dies erfolgt durch örtliches Mindern der Knicksteifigkeit bzw. durch partielles Schwächen des Widerstandsmoments über die Deformationseinflusszonen und deren Auslegung und Anordnung. Das Lochbild wird bauteil- und funktionsgerecht ausgelegt. Möglich ist beispielsweise die Anordnung von großen relativ dicht zueinander angeordneten Löchern in einer Zeile, also eine einzeilige Anordnung.

Bei einer für die Praxis besonders vorteilhaften Ausführungsform eines erfindungsgemäßen Kraftfahrzeugbauteils beträgt der Flächenanteil der Löcher im Flächenabschnitt, welcher eine Zugfestigkeit Rm von größer oder gleich (≥) 1.250 MPa besitzt und der mit dem Lochmuster versehen ist, zwischen 20% und 60%.

Ein Aspekt der Erfindung sieht vor, dass die Löcher insbesondere rund, oval oder elliptisch sind. Bevorzugt sind gerundete Löcher ohne eckige Übergänge. Hierdurch kann eine Kerbwirkung vermieden werden. Die Löcher weisen einen Durchmesser zwischen größer oder gleich (≥) 5 mm und kleiner oder gleich (≤) 30 mm, insbesondere kleiner oder gleich (≤) 20 mm auf. Die Angabe des Durchmessers bezieht sich jeweils auf die Längsachse eines Lochs bzw. die Hauptachse eines Lochs. Die Löcher sind gut stanzbar.

Innerhalb eines Lochmusters können auch Löcher mit unterschiedlichen Durchmessern im erfindungsgemäß vorgegebenen Durchmesserbereich kombiniert sein. Das Lochmuster weist dann zumindest zwei Löcher mit voneinander verschiedenen Durchmessern auf.

In der Praxis sind Lochdurchmesser zwischen 5 bis 18 mm oder 6 bis 14 mm möglich und effizient.

Die Löcher können auch Umstellungen am Lochrand, insbesondere kragenförmige Umstellungen aufweisen. Die Löcher sind dann als sogenannte Durchzüge ausgebildet. Ein randseitiger Kragen an einem Loch kann umlaufend oder unterbrochen ausgeführt sein. Insbesondere werden die Kragen an den Löchern beim Herstellen der Löcher ausgebildet.

Bei einer vorteilhaften Ausgestaltung sind zwei benachbarte Löcher in einem Abstand zueinander angeordnet, wobei der Abstand der Löcher kleiner oder gleich (≤) dem Lochdurchmesser bemessen ist. Dieser Abstand wird vom Lochrand eines der Löcher zum benachbarten Lochrand des benachbarten Loches gemessen. Der Abstand zwischen den Lochrändern von benachbarten Löchern kann auch als Stegbreite bezeichnet werden.

Eine vorteilhafte Alternative sieht vor, dass die Stegbreite, also der Abstand zwischen zwei benachbarten Löchern 5 mm bis zum 2,5fachen Durchmesser der Löcher bzw. der größten Lochweite bemessen ist.

Eine praktische Ausgestaltung sieht in diesem Zusammenhang vor, dass zwei benachbarte Löcher in einem Abstand zwischen jeweils einschließlich 4,0 mm und 50,0 mm angeordnet sind. Diese Ausführung weist eine gute Stanzbarkeit in einem Pressenhub auf.

Weiterhin kann bei einem Kraftfahrzeugbauteil eine Deformationseinflusszone durch ein Lochmuster gebildet sein, bei welchem eine Anzahl von Löchern zueinander einen unterschiedlichen Abstand besitzen. Ein erstes Loch und ein zu dem ersten Loch benachbartes zweites Loch weisen einen ersten Abstand auf. Das zweite Loch und ein zum zweiten Loch benachbartes drittes Loch weisen relativ zueinander einen zweiten Abstand auf. Der erste Abstand zwischen dem ersten Loch und dem zweiten Loch und der zweite Abstand zwischen dem zweiten Loch und dem dritten Loch ist voneinander verschieden groß bemessen.

Durch eine Variation von Löchern mit verschiedenen Durchmessern und Löchern, die relativ zueinander in unterschiedlichen Abständen angeordnet sind, kann gezielt das Absorptionsvermögen für kinetische Energie bei Reduktion von Zuspannungslasten im Kraftfahrzeugbauteil eingestellt werden. Die Deformationseinflusszone bewirkt ein auf das jeweilige Kraftfahrzeugbauteil abgestimmtes bestimmungsgemäßes Deformations- bzw. Verformungsverhalten.

Die Deformationseinflusszone ist abgestimmt auf die in einem Crashfall zu erwartende Krafteinleitungsrichtung.

Der Flächenabschnitt des Basiskörpers weist eine Abschnittslänge auf die in Richtung der Hauptachse bzw. Erstreckungsachse des Basiskörpers bemessen ist. Der Basiskörper weist gemessen über seine Hauptachse eine Gesamtlänge auf. Ein vorteilhafter Aspekt dieser Erfindung sieht vor, dass das Verhältnis der Abschnittslänge des Flächenabschnitts zur Gesamtlänge des Basiskörpers zwischen 1 bis 35 zu 100 (1:100 bis 35:100) bemessen ist. Mit anderen Worten, Grundkörper bzw. das Fahrzeugbauteil hat im überwiegenden Teil seiner Fläche keine gelochten Flächenabschnitte mit Lochmuster. Selbstverständlich sind im Rahmen der Erfindung weitere funktionale Öffnungen möglich.

Eine weitere vorteilhafte Ausgestaltung der Erfindung sieht ein Lochmuster vor, welches aus zumindest zwei vertikal und/oder horizontal zueinander beabstandeten Lochreihen gebildet ist. Besonders vorteilhaft sind die Löcher der Lochreihen vertikal und/oder horizontal zueinander versetzt angeordnet. Einzelne Lochreihen können geradlinig oder kurvenförmig verlaufen. Insbesondere sind die Lochlöcher und die Lochreihen bzw. das Lochbild abgestimmt auf den dreidimensionalen Konturverlauf des Basiskörpers im Flächenabschnitt und der Ausgestaltung der Deformationseinflusszone.

Alternativ zur Anordnung mehrerer Lochreihen kann auch eine unregelmäßige Verteilung der Löcher ohne Reihenzuordnung vorteilhaft sein, insbesondere zur Rissbehinderung bzw. Risshemmung bei einer crashbedingten Verformung.

Eine besonders vorteilhafte Ausführungsform besteht in einem Lochmuster, welches einen ungelochten Bereich des Flächenabschnitts umschließt.

Eine Deformationseinflusszone ist erfindungsgemäß so ausgestaltet und derart im Flächenabschnitt zu einem Beschnittrand angeordnet, dass einem Risswachstum entgegenwirkt wird. Insbesondere wird ein Wachsen oder Ausbreiten von Rissen, die bei einem Anprall auftreten, minimiert bzw. jedenfalls begrenzt. Die Deformationseinflusszone ist derart angeordnet, dass sie ein Risswachstum begrenzt. In diesem Zusammenhang ist die Deformationszone zu einem Beschnittrand beabstandet angeordnet und besitzt einen Zonenabstand zum Beschnittrand, der mindestens dem Durchmesser des kleinsten Lochs in einer Deformationseinflusszone entspricht. Der Basiskörper besteht vorzugsweise aus einem homogen, dicken- oder werkstoffeinheitlichen Stahlblech. Durch die Erfindung kann auf den Einsatz von tailored blanks, insbesondere tailored rolled oder tailored welded blanks verzichtet werden.

Im Rahmen der Erfindung kann ein Basiskörper auch mehrere, insbesondere zwei Flächenabschnitte mit einer Zugfestigkeit Rm von größer oder gleich 1250 MPa und jeweils eine darin vorgesehene Deformationseinflusszone aufweisen.

Durch die Anordnung von zwei mit Abstand zueinander liegenden Flächenabschnitten, in denen jeweils eine Deformationseinflusszone vorgesehen ist, wird ein für das Deformationsverhalten vorteilhafter 4-Punkt- Biegemodus realisiert. Eine Biegung des Kraftfahrzeugbauteils, beispielsweise eines Längsträgers, eines Seitenschwellers oder auch eines Stoßfängerquerträgers, erfolgt durch diese Ausgestaltung außermittig. Das Verformungsverhalten und das Energieabsorptionsvermögen ist verbessert, der absolute Biegeweg kürzer.

Die erfindungsgemäß vorgesehenen perforierten Deformationseinflusszonen reduzieren lokal die Schubübertragung bei Biegung. Die axiale Stabilität wird kaum verändert. Die Ausgestaltung ist besonders vorteilhaft bei Kraftfahrzeugbauteilen, die axial, aber auch radial belastet werden.

Die Erfindung bezieht sich insbesondere auf Kraftfahrzeugbauteile wie A-, B- oder C-Säulen, Schweller, Stoßfängerquerträger, Seiten- und/oder Türaufbauträger sowie Dachrahmen, Längsträger, Tunnel und auch Querlenker.

Bei einer B-Säule liegt die Deformationseinflusszone bevorzugt im unteren Drittel der Länge der B-Säule, insbesondere oberhalb eines verbreiterten Säulenfußes.

Vorzugsweise weist der Basiskörper der Kraftfahrzeugbauteile einen Längenabschnitt auf, welcher einen im Wesentlichen U-förmigen oder V-förmigen Querschnitt besitzt mit einem Basissteg und zwei Schenkeln, wobei sich endseitig an die Schenkel Flansche anschließen. Der Längenabschnitt erstreckt sich vorzugsweise über den überwiegenden Teil der Länge des Basiskörpers.

Im Rahmen der Erfindung ist vorzugsweise vorgesehen, dass wenigstens ein Lochmuster in zumindest einem Schenkel des Basiskörpers bzw. des Längenabschnitts des Basiskörpers vorgesehen ist, welcher den U-förmigen oder V-förmigen Querschnitt besitzt.

Alternativ oder zusätzlich kann ein Lochmuster im Bereich des Übergangs vom Basissteg des Längenabschnitts zu einem Schenkel vorgesehen sein. Der Übergang selbst kann gerundet gestaltet oder als Biege- bzw. Knickkante ausgebildet sein. Das Lochmuster ist unmittelbar in der Übergangslinie bzw. Biege- oder Knicklinie vorgesehen. Das Lochmuster kann auch einen Abschnitt links und rechts der Übergangslinie bzw. Biege- oder Knicklinie erfassen.

Alternativ oder zusätzlich kann ein Lochmuster im Basissteg des Längenabschnitts vorgesehen sein.

Wiederum alternativ oder zusätzlich kann ein Lochmuster auch in zumindest einem Flansch des U- bzw. V-förmig konfigurierten Längenabschnitts des Basiskörpers vorgesehen sein.

Bei einem Längsträger können Deformationseinflusszonen verteilt über die Länge des Trägers vorgesehen sein. **In** den beiden Endabschnitten ist der Längsträger nicht perforiert bzw. der Längsträger weist dort keine Deformationseinflusszonen auf. Die Länge der Endabschnitte ist mit ca. 300 mm bemessen, wenn der Längsträger bzw. das Kraftfahrzeugbauteil eine Gesamtlänge von mehr als 1000 mm besitzt. **In** dem zwischen den Endabschnitten liegenden mittleren Längenabschnitt des Kraftfahrzeugbauteils sind verteilt mit Abstand zueinander Deformationseinflusszonen vorgesehen. Diese weisen das aus Löchern gebildete Lochmuster auf. Die einzelnen Deformationseinflusszonen können eine Länge von mindestens 200 mm besitzen. Bei einem Kraftfahrzeugbauteil, welches einen Längenabschnitt aufweist, der einen im Wesentlichen U-förmigen oder V-förmigen Querschnitt besitzt, können Deformationseinflusszonen in den Schenkeln an den Oberseiten und Unterseiten des Kraftfahrzeugbauteils vorgesehen sein. Vorteilhaft sind die Deformationseinflusszonen an den Oberseiten und an den Unterseiten relativ zueinander versetzt vorgesehen.

Die Erfindung ist nachfolgend anhand von Zeichnungen näher beschrieben. Es zeigen:
- Figur 1: ein erfindungsgemäßes Kraftfahrzeugbauteil in Form einer B-Säule in einer Frontalansicht;
- Figur 2: die B-Säule in einer Seitenansicht;
- Figur 3: eine weitere Ausführungsform eines erfindungsgemäßen Kraftfahrzeugbauteils;
- Figur 4: technisch schematisiert den Querschnitt des Kraftfahrzeugbauteils;
- Figur 5: einen Ausschnitt aus dem Kraftfahrzeugbauteil gemäß der Figur 4 im Bereich der Deformationseinflusszone;
- Figur 6: technisch schematisiert einen Querschnitt durch ein Kraftfahrzeugbauteil mit der Darstellung von Bauteilabschnitten, in welchen eine Deformationseinflusszone vorgesehen sein kann;
- Figur 7: eine perspektivische Darstellung eines erfindungsgemäßen Kraftfahrzeugbauteils in Form eines Stoßfängerquerträgers;
- Figur 8: ebenfalls in einer perspektivischen Darstellungsweise einen Stoßfängerquerträger mit erfindungsgemäß ausgestalteten Kraftfahrzeugbauteilen in Form von Crashboxen;
- Figur 9: den Stoßfänger in der Perspektive, bei welchem sowohl die Crashboxen als auch der Stoßfängerquerträger erfindungsgemäß ausgestaltet sind;
- Figur 10: ein erfindungsgemäßes Kraftfahrzeugbauteil in Form eines Dachrahmenabschnitts in einer Perspektive;
- Figur 11: eine weitere Ausführungsform eines erfindungsgemäßen Kraftfahrzeugbauteils in Form eines Schwellers;
- Figur 12: eine weitere Ausführungsform eines erfindungsgemäßen Kraftfahrzeugbauteils in Form eines Längsträgers;
- Figur 13: technisch schematisiert einen Querschnitt durch den Längsträger gemäß der Darstellung von Figur 12 und
- Figur 14: eine weitere Ausführungsform eines erfindungsgemäßen Kraftfahrzeugbauteils in Form eines Tunnels in einer perspektivischen Darstellung.

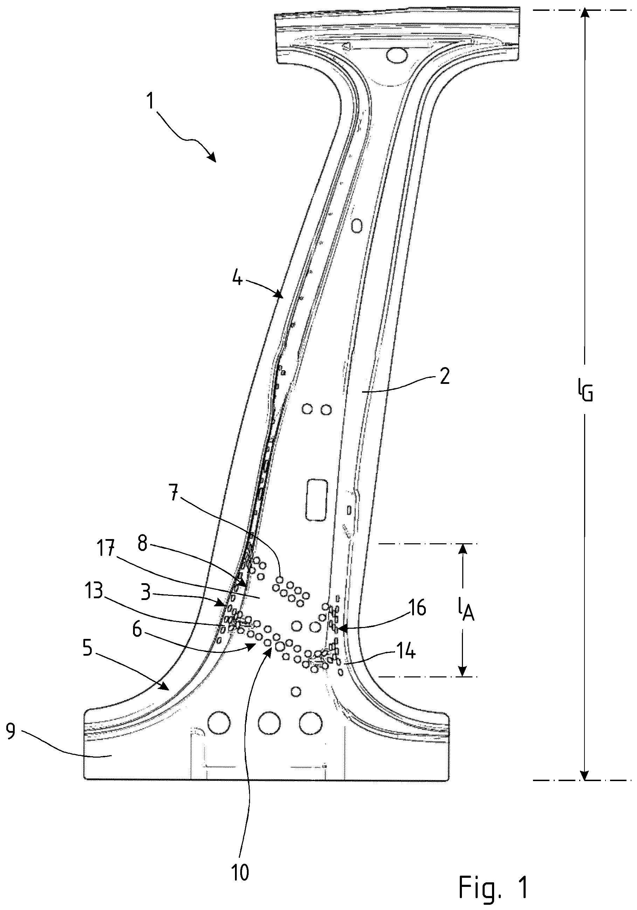

Einander entsprechende Bauteile und Bauteilkomponenten sind in den Figuren 1 bis 14 mit den gleichen Bezugszeichen versehen.

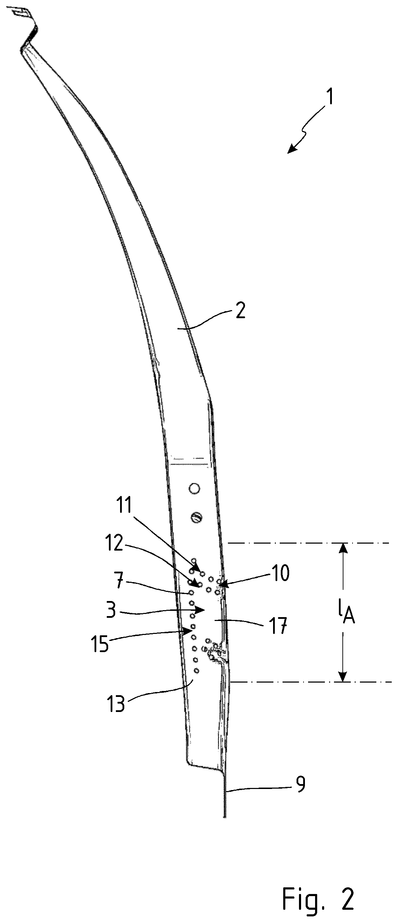

Die Figuren 1 und 2 zeigen ein erfindungsgemäßes Kraftfahrzeugbauteil 1 in Form einer B-Säule.

Die B-Säule weist einen formgehärteten Basiskörper 2 aus einem Mangan-Bor-Stahlblech auf. Der Basiskörper 2 besitzt einen Flächenabschnitt 3. Dieser Flächenabschnitt 3 weist durch die Formhärtung eine Zugfestigkeit Rm von größer oder gleich (≥) 1.300 MPa auf. In den Abschnitten 4, 5 oberhalb und unterhalb des Flächenabschnittes 3 kann die B-Säule eine von der Zugfestigkeit des Flächenabschnitts 3 abweichende Zugfestigkeit Rm aufweisen. Im Flächenabschnitt 3 ist ein Lochmuster 6 aus mindestens drei Löchern 7 angeordnet, welches eine Deformationseinflusszone 8 bildet. Der Flächenanteil der Löcher 7 im Flächenabschnitt 3 beträgt zwischen 30% und 60%.

Der Flächenabschnitt 3 mit dem Lochmuster 6 und die dadurch ausgebildete Deformationseinflusszone 8 sind im unteren Drittel der B-Säule im Bereich oberhalb des Übergangs zum Säulenfuß 9 angeordnet.

Das Lochmuster 6 weist jeweils zwei einen Doppellochstreifen 10 bildende Lochreihen 11, 12 auf. Die Doppellochstreifen 10 bzw. die Lochreihen 11, 12 erstrecken sich in Querrichtung schräg über die nahezu vollständige Breite der B-Säule 1. Jeweils an den seitlichen Schenkeln 13, 14 der B-Säule ist eine weitere zum Lochmuster 6 gehörende vertikal ausgerichtete Lochreihe 15, 16 vorgesehen. Das Lochmuster 6 wird durch vertikal und horizontal zueinander beabstandete Lochreihen 11, 12, 15, 16 gebildet. Das Lochmuster 6 umschließt einen ungelochten Bereich 17 des Flächenabschnitts 3.

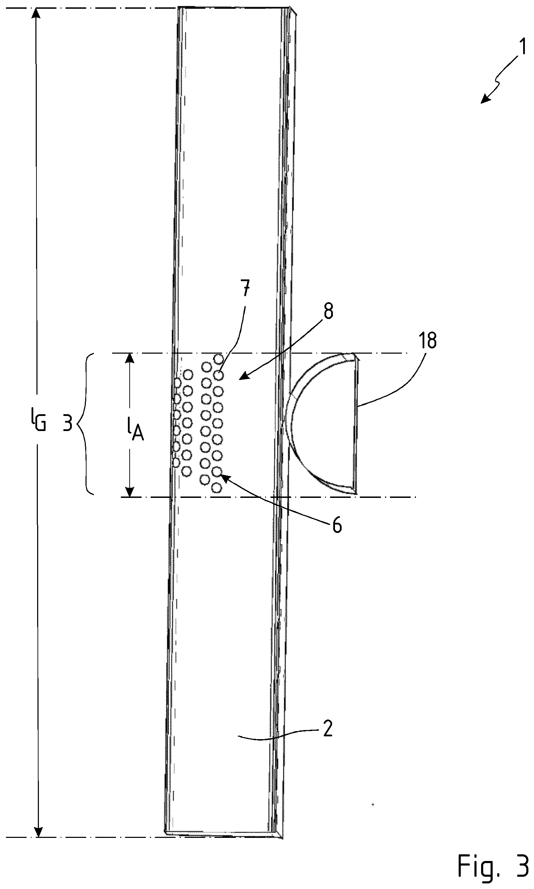

Die Löcher 7 besitzen einen Durchmesser d zwischen 5 mm und 20 mm, siehe hierzu auch Figuren 3 bis 5. Der Durchmesser d der Löcher 7 innerhalb eines Lochmusters 6 kann variieren. Bei der B-Säule bzw. deren Basiskörper 2 sind die Löcher 7 kreisrund mit einem Durchmesser d zwischen 7,0 mm und 10,0 mm. Zwei benachbarte Löcher 7 sind jeweils in einem Abstand a zueinander angeordnet, wobei der Abstand a generell zwischen 4,0 mm und 50,0 mm liegen kann. Beim dargestellten Ausführungsbeispiel beträgt der Abstand a zwischen 4,0 mm und 20,0 mm. Bei mehreren Lochreihen 11, 12 oder 15, 16 ist ein horizontaler Abstand b und ein vertikaler Abstand a vorhanden, wobei der Abstand a und der Abstand b gleich oder voneinander verschieden sein können. Bei einer vorteilhaften Ausgestaltung ist der Abstand b kleiner oder gleich dem Zweifachen des Durchmessers d und größer als der Durchmesser d. Der Abstand b wird dabei von Lochmittelpunkt zu Lochmittelpunkt gemessen.

Das Verhältnis des Abstands b zum Durchmesser d kann wie folgt ausgedrückt werden: d ≤ b ≤ 2d. Der Abstand b zwischen zwei Lochreihen ist größer oder gleich dem Durchmesser d, jedoch kleiner oder gleich als das Zweifache des Durchmessers d. Diese Maßgabe stellt sicher, dass ausreichend Material zum Energieabbau zwischen den Löchern der beiden Lochreihen vorhanden ist. Hierdurch ist potenzielles Rissmaterial und eine Rissstrecke sichergestellt.

Durch die erfindungsgemäß vorgesehene Deformationseinflusszone 8 ist die B-Säule für einen Lastfall bei einem Seitenanprall optimiert. Die B-Säule weist eine deutlich verbesserte Fähigkeit zur Aufnahme von kinetischer Energie auf. Das Lochmuster 6 ist dergestalt ausgelegt und angeordnet, dass eine gezielte Biegesteifigkeit eingestellt ist und Zugspannungslasten in Folge der Krafteinleitung reduziert werden. Dies geschieht insbesondere durch ein vielfaches Gabeln der auftretenden Lasten in Teilzugspannungen bzw. -pfade. Zudem wird durch die Lochung eine Gewichtsreduzierung des Kraftfahrzeugbauteils 1 erzielt.

Die Figuren 3 bis 5 zeigen eine weitere Ausführungsform eines Kraftfahrzeugbauteils 1. Hierbei handelt es sich um einen Längs- oder Querträger bzw. einen Schweller. Die Ausgestaltung ist analog zum anhand der Figuren 1 und 2 beschriebenen Kraftfahrzeugbauteils 1 ausgeführt. Demzufolge sind die Bezugszeichen entsprechend verwendet. Das Kraftfahrzeugbauteil 1 weist einen formgehärteten Basiskörper 2 aus einem Stahlblech auf. Der Basiskörper 2 besitzt einen mit Löchern versehenen Flächenabschnitt 3, wobei der Flächenabschnitt 3 eine Zugfestigkeit Rm von größer oder gleich (≥) 1.250 MPa, insbesondere 1300 MPa besitzt. Das aus den Löchern 7 gebildete Lochmuster 6 bildet im Flächenabschnitt 3 eine Deformationseinflusszone 8, wobei der Flächenanteil der Löcher im Flächenabschnitt 3 zwischen 20%, insbesondere 30 % und 60% beträgt.

Mit 18 ist in der Figur 3 ein Anprallhindernis gekennzeichnet.

Der Flächenabschnitt 3 in den Basiskörpern 2 der Kraftfahrzeugbauteile 1 gemäß den Darstellungen der Figuren 1 und 2 bzw. 3 weist eine Abschnittslänge I_{A} auf. Der Basiskörper 2 besitzt eine Gesamtlänge I_{G}. Das Verhältnis der Abschnittslänge I_{A} zur Gesamtlänge I_{G} ist zwischen 1:100 bis 35:100 bemessen, insbesondere liegt das Verhältnis bei ca. 30:100.

Bei den in den Figuren 3 bis 5 dargestellten Kraftfahrzeugbauteil 1 ist das Lochmuster 6 aus zumindest zwei vertikal und/oder horizontal zueinander beabstandeten Lochreihen 11, 12 gebildet. Die Löcher 7 in den Lochreihen 11, 12 sind jeweils zueinander versetzt angeordnet. Es kann sinnvoll sein, maximal zwei Lochreihen vorzusehen, um zu lange Risse zwischen den Lochreihen bzw. Löchern zu verhindern. Vorzugsweise ist der horizontale Abstand b kleiner 30 mm.

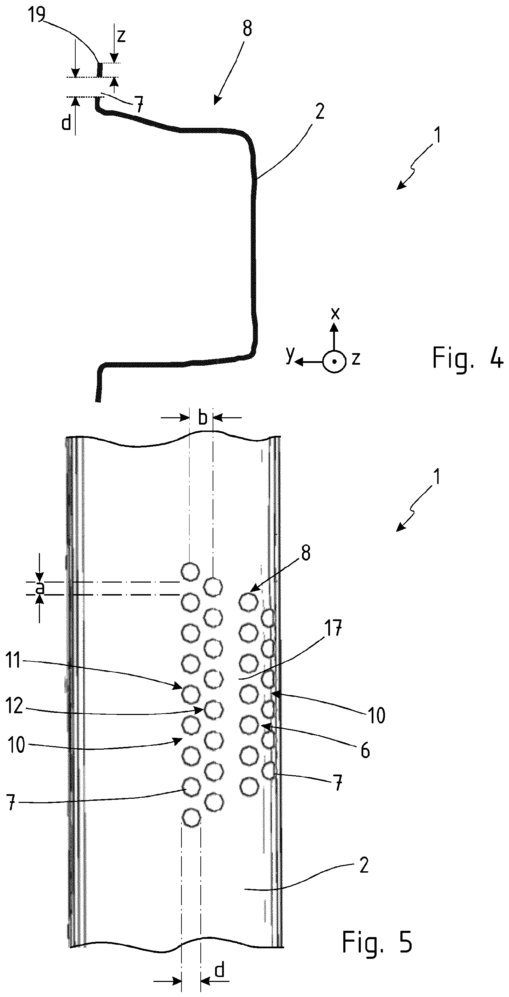

Die Figur 4 ist technisch schematisiert und nicht maßgeblich zu verstehen. Die Figur 4 dient zur Erläuterung der Anordnung einer Deformationseinflusszone 8 in Relation zu einem Beschnittrand 19 eines Basiskörpers 2. Die Deformationseinflusszone 8 sitzt zum Beschnittrand 19 einen Zonenabstand z der mindestens dem Durchmesser d des kleinsten Lochs 7 in der Deformationseinflusszone 8 entspricht.

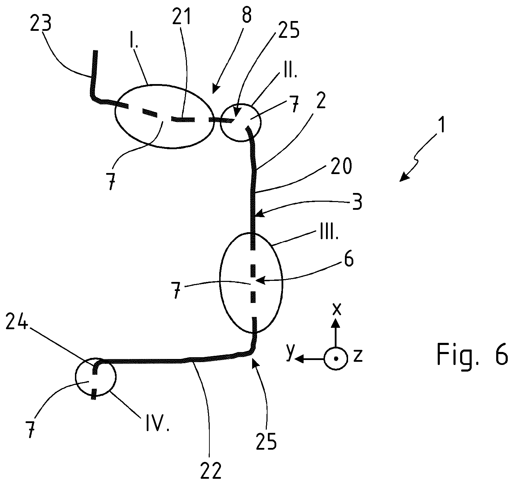

Die Figur 6 zeigt ein Kraftfahrzeugbauteil 1 im Querschnitt. Der Basiskörper 2 des Kraftfahrzeugbauteils 1 weist einen Längenabschnitt auf, welcher einen im Wesentlichen U-förmigen Querschnitt besitzt. Der Längenabschnitt mit U-förmigem Querschnitt weist einen Basissteg 20 und zwei Schenkel 21, 22 auf. An die Schenkel 21, 22 schließen sich endseitig nach außen gerichtete Flansche 23, 24 an.

Der Längenabschnitt kann auch einen hier nicht dargestellten V-förmigen Querschnitt besitzen. In diesem Fall gehen die Schenkel 21, 22 über einen nur eine kurze Breite besitzenden Basissteg 20 ineinander über.

In der Figur 6 sind Zonen I, II, III und IV kenntlich gemacht, welche eine Deformationseinflusszone 8 mit einem aus Löchern 7 gebildeten Lochmuster 6 vorgesehen sein kann.

In dem jeweiligen Flächenabschnitt 3 des Längenabschnitts besitzt das Kraftfahrzeugbauteil 1 eine Zugfestigkeit Rm von größer oder gleich (≥) 1.250 MPa. Die Löcher 7 besitzen einen Durchmesser d zwischen 5 mm und 20 mm. Der Flächenanteil der Löcher 7 im Flächenabschnitt 3 liegt zwischen 7% und 60%, vorzugsweise im Bereich zwischen 20% und 45%.

Vorzugsweise ist ein aus Löchern 7 gebildetes Lochmuster 6 in einem oder beiden Schenkeln 21, 22 vorgesehen. In der Zone I ist das Lochmuster 6 im Schenkel 21 dargestellt.

Alternativ oder zusätzlich kann ein Lochmuster 6 im Bereich des Übergangs 25 von Basissteg 20 zu einem Schenkel 21, 22 in der Zone II vorgesehen sein.

Des Weiteren kann ein Lochmuster 6 im Basissteg 20 und der mit III kenntlich gemachten Zone angeordnet sein.

Schließlich ist alternativ oder zusätzlich auch die Anordnung eines Lochmuster 6 in zumindest einem Flansch 23, 24 möglich. In der Figur 6 ist die Anordnung des Lochmusters 6 in der Zone IV im Flansch 24 dargestellt.

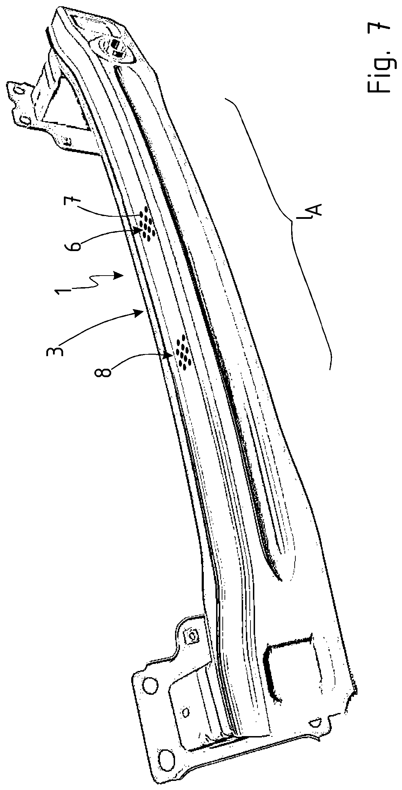

Die Figur 7 zeigt ein Kraftfahrzeugbauteil 1 in Form eines Stoßfängerquerträgers. Dieser weist einen Flächenabschnitt 3 auf mit einer Zugfestigkeit zwischen 1.250 MPa und 2.100 MPa. Im mittleren Längenabschnitt des Stoßfängerquerträgers bzw. des Kraftfahrzeugbauteils 1 ist der Flächenabschnitt 3 mit der Abschnittslänge I_{A} vorgesehen. Grundsätzlich kann der Stoßfängerquerträger über seine gesamte Länge eine Zugfestigkeit von größer oder gleich (≥) 1.250 MPa besitzen. In dem Flächenabschnitt 3 sind zwei Lochmuster 6 vorgesehen, welche aus einer Anordnung von Löchern 7 ausgebildet sind.

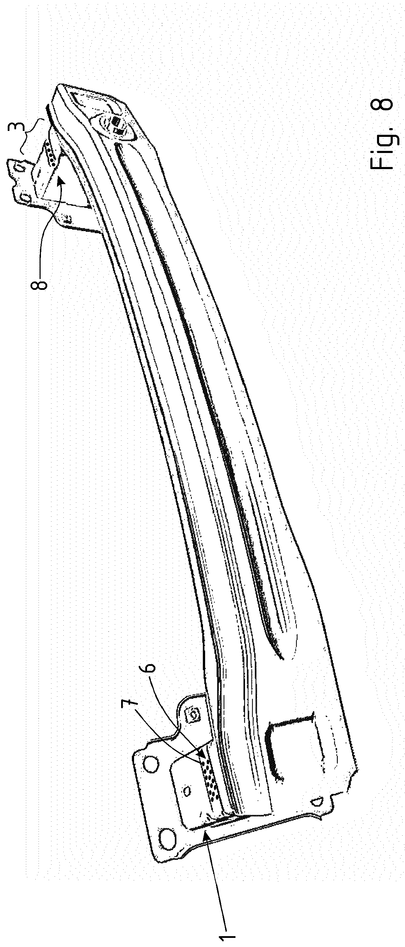

Die Figur 8 zeigt einen Stoßfängerquerträger mit Stoßstange und erfindungsgemäß ausgestalteten Kraftfahrzeugbauteilen 1 in Form von Crashboxen. Im dargestellten Ausführungsbeispiel ist das aus Löchern 7 gebildete Lochmuster 6 jeweils in der oberen Seitenwand einer Crashbox angeordnet.

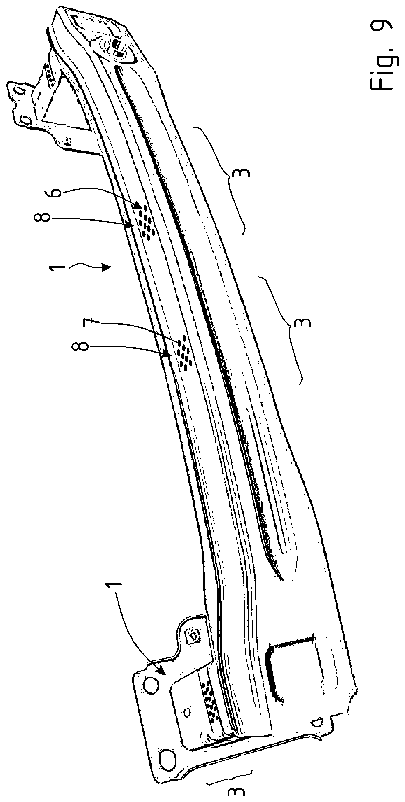

Figur 9 zeigt den Stoßfängerquerträger, bei dem die Stoßstange analog zur Darstellung der Figur 7 und die Crashboxen analog zur Darstellung der Figur 8 jeweils mit einer Deformationseinflusszone 8 gebildet aus einem Lochmuster 6 mit Löchern 7 ausgeführt sind. In der Figur 9 sind exemplarisch zwei Flächenabschnitte 3 dargestellt, welche die erfindungsgemäß vorgesehene Zugfestigkeit besitzen und mit Deformationseinflusszonen 8 versehen sind. Die jeweilige Länge der Flächenabschnitte 3 kann größer als in der Figur 9 angedeutet ausgeführt sein und insbesondere sich von der Mitte des Stoßfängerquerträgers ausgehend bis in den endseitigen Bereich erstrecken.

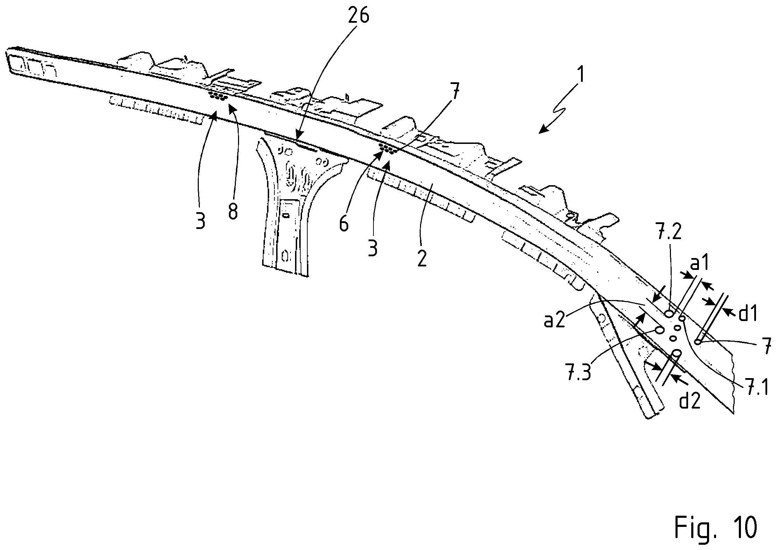

Figur 10 zeigt einen Ausschnitt aus einem Kraftfahrzeugbauteil 1 in Form eines Dachrahmens. Dort sind in einem Abstand links und rechts von der oberen B-Säulenanbindung 26 Lochmuster 6 vorgesehen.

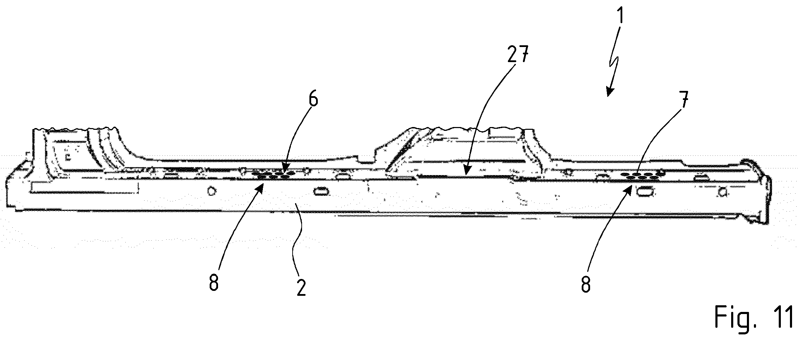

Figur 11 zeigt ein Kraftfahrzeugbauteil 1 in Form eines Schwellers. Der Schweller ist erfindungsgemäß ausgestaltet und weist links und rechts der unteren B-Säulenanbindung 27 jeweils ein Lochmuster 6 gebildet aus Löchern 7 auf, die jeweils eine Deformationseinflusszone 8 bilden.

Ein Kraftfahrzeugbauteil 1 in Form eines Schwellers, wie in der Figur 11 dargestellt, ebenso wie in Form eines Dachrahmens, wie in der Figur 10, dargestellt wird bei einem Seitenaufprall bzw. einem Pfahlcrashtest nicht direkt im Bereich der Säulenanbindung, also der sich zwischen Dachrahmen und Schweller erstreckenden Säule knicken, sondern deformiert unter erhöhter Energieaufnahme gezielt in oder nahe der beiden Deformationseinflusszonen 8. Die maximale Einbringung ist dadurch im Vergleich zu herkömmlichen Schwellern oder Dachrahmen reduziert.

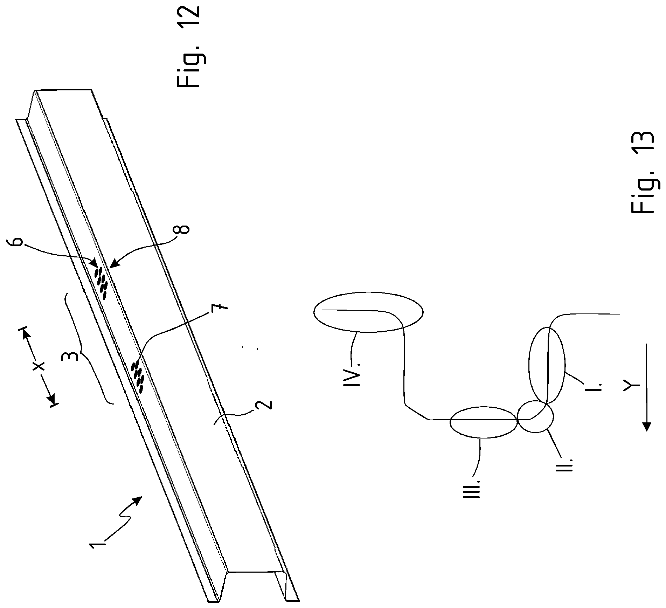

Ein Kraftfahrzeugbauteil 1 in Form eines Längsträgers zeigt die Figur 12. Dort sind Deformationseinflusszonen 8 in einem Abstand x jeweils im oberen Schenkel 21 angeordnet. Der Längsträger kann auch durch ein Schließblech durchgehend oder längenabschnittsweise verschlossen sein. Ein solcher Längsträger ist beispielsweise Teil des Vorderwagens oder Teil des Hinterwagens eines Kraftfahrzeugs.

Die Figur 13 zeigt schematisch einen Querschnitt durch das Kraftfahrzeugbauteil 1 der Figur 12. Dort kenntlich gemacht sind Zonen **I,** II, III, IV, in welchen Deformationseinflusszonen 8 angeordnet sein können.

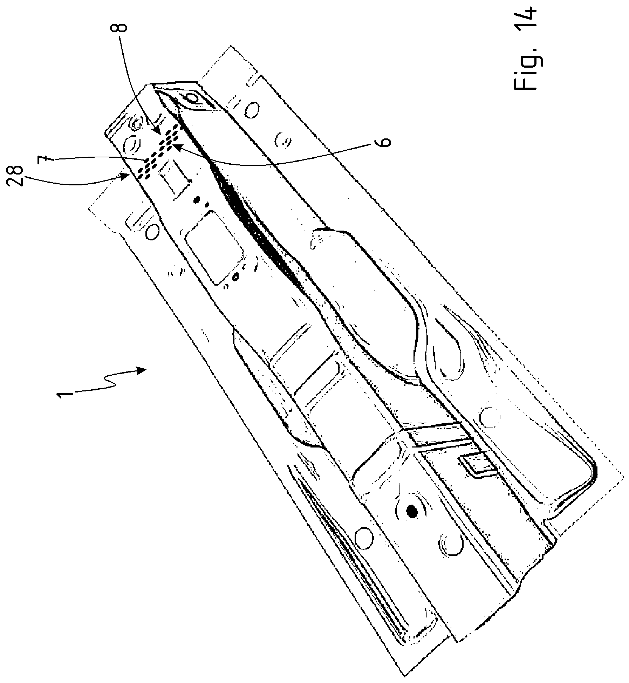

Ein Kraftfahrzeugbauteil 1 in Form eines Mitteltunnels zeigt die Figur 14. Eine Deformationseinflusszone 8, gebildet durch ein Lochmuster 6 aus Löchern 7 ist dort im Bereich des vorderseitigen Abschnitt 28 des Kraftfahrzeugbauteils 1 bzw. des Mitteltunnels vorgesehen. Bei axialer Energieaufnahme beispielsweise in Folge eines Frontalcrashs kommt es zu einem axialen Stauchen des Mitteltunnels und einer Energieaufnahme bzw. Absorption ab einer definierten relativ hohen Lastspitze. Dies wird vorteilhaft durch die Deformationseinflusszone 8 initiiert und umgesetzt bzw. bewirkt.

Anhand der Figur 10 ist verdeutlicht, dass die Löcher 7 eines Lochmusters 6 voneinander verschiedene Durchmesser d1, d2 besitzen können. Des Weiteren ist dargestellt, dass ein erstes Loch 7.1 und ein zum ersten Loch 7.1 benachbartes zweites Loch 7.2 in einem Abstand a1 zueinander angeordnet sind. Ein zum zweiten Loch 7.2 benachbartes drittes Loch 7.3 weist zum zweiten Loch 7.2 einen Abstand a2 auf. Der Abstand a1 zwischen dem ersten Loch 7.1 und dem zweiten Loch 7.2 und der Abstand a2 zwischen dem zweiten Loch 7.2 und dem dritten Loch 7.3 sind verschieden groß bemessen. Der Abstand a1 ist größer als der Abstand a2.

### Bezugszeichen:

- 1 -: Kraftfahrzeugbauteil
- 2 -: Basiskörper
- 3 -: Flächenabschnitt
- 4 -: Abschnitt
- 5 -: Abschnitt
- 6 -: Lochmuster
- 7 -: Löcher
- 7.1 -: erstes Loch
- 7.2 -: zweites Loch
- 7.3 -: drittes Loch
- 8 -: Deformationseinflusszone
- 9 -: Säulenfuß
- 10 -: Doppellochstreifen
- 11 -: Lochreihe
- 12 -: Lochreihe
- 13 -: Schenkel
- 14 -: Schenkel
- 15 -: Lochreihe
- 16 -: Lochreihe
- 17 -: Bereich
- 18 -: Anprallhindernis
- 19 -: Beschnittrand
- 20 -: Basissteg
- 21 -: Schenkel
- 22 -: Schenkel
- 23 -: Flansch
- 24 -: Flansch
- 25 -: Übergang
- 26 -: obere B-Säulenanbindung
- 27 -: untere B-Säulenanbindung
- 28 -: Ende von 1
- a -: Abstand
- a1 -: Abstand
- a2 -: Abstand
- d -: Durchmesser
- d1 -: Durchmesser
- d2 -: Durchmesser
- I_{A} -: Abschnittslänge
- I_{G} -: Gesamtlänge
- x -: Abstand
- z -: Zonenabstand

## Patentansprüche

1. Kraftfahrzeugbauteil (1), welches einen Basiskörper (2) aus einem Stahlblech besitzt, wobei der Basiskörper (2) einen mit Löchern (7) versehenen Flächenabschnitt (3) aufweist, **dadurch gekennzeichnet, dass** der Flächenabschnitt (3) eine Zugfestigkeit Rm von größer oder gleich (≥) 1.250 MPa besitzt und ein Lochmuster (6) aus mindestens drei Löchern (7) im Flächenabschnitt (3) eine Deformationseinflusszone (8) bildet, wobei der Flächenanteil der Löcher (7) im Flächenabschnitt (3) zwischen 7 % und 60 % beträgt und die Löcher (7) einen Durchmesser (d) bis zu 30 mm besitzen.

2. Kraftfahrzeugbauteil nach Anspruch 1, **dadurch gekennzeichnet, dass** der Flächenanteil der Löcher (7) im Flächenabschnitt (3) zwischen 20 % und 60 % beträgt.

3. Kraftfahrzeugbauteil nach Anspruch 1 oder 2, **dadurch gekennzeichnet, dass** das Lochmuster (6) zumindest zwei Löcher (7) mit voneinander verschiedenen Durchmessern (d1, d2) aufweist.

4. Kraftfahrzeugbauteil nach einem der Ansprüche 1 bis 3, **dadurch gekennzeichnet, dass** zwei benachbarte Löcher (7) in einem Abstand (a) zueinander angeordnet sind, wobei der Abstand (a) kleiner oder gleich (≤) dem Lochdurchmesser (6) bemessen ist.

5. Kraftfahrzeugbauteil nach einem der Ansprüche 1 bis 4, **dadurch gekennzeichnet, dass** zwei benachbarte Löcher (7) in einem Abstand (a) bis zu 50,0 mm angeordnet sind.

6. Kraftfahrzeugbauteil nach einem der Ansprüche 1 bis 5, **dadurch gekennzeichnet, dass** das Lochmuster (6) aus zumindest zwei vertikal und/oder horizontal zueinander beabstandeten und sich insbesondere parallel zueinander erstreckenden Lochreihen (11, 12, 15, 16) gebildet ist.

7. Kraftfahrzeugbauteil nach Anspruch 6, **dadurch gekennzeichnet, dass** die Löcher (7) der einen Lochreihe (11) in Bezug auf die Löcher (7) der anderen Lochreihe (12) versetzt angeordnet sind.

8. Kraftfahrzeugbauteil nach einem der Ansprüche 1 bis 7, **dadurch gekennzeichnet, dass** das Lochmuster (6) einen ungelochten Bereich (17) des Flächenabschnitts (3) umschließt.

9. Kraftfahrzeugbauteil nach einem der Ansprüche 1 bis 8, **dadurch gekennzeichnet, dass** der Basiskörper (2) zumindest einen Beschnittrand (19) aufweist, wobei die Deformationseinflusszone (8) zum Beschnittrand (19) einen Zonenabstand (z) besitzt, der mindestens dem Durchmesser (d) des kleinsten Lochs (7) in der Deformationseinflusszone (8) entspricht.

10. Kraftfahrzeugbauteil nach einem der Ansprüche 1 bis 9, **dadurch gekennzeichnet, dass** zumindest zwei Flächenabschnitte (3) vorgesehen sind, wobei jeder Flächenabschnitt (3) ein aus Löchern (7) gebildetes Lochmuster (6) aufweist.

11. Kraftfahrzeugbauteil nach Anspruch 10, **dadurch gekennzeichnet, dass** in zwei mit axialem Abstand zueinander angeordneten Flächenabschnitten (3) voneinander verschiedene Lochmuster (6) vorgesehen sind.

12. Kraftfahrzeugbauteil nach einem der Ansprüche 1 bis 11, **dadurch gekennzeichnet, dass** der Basiskörper (2) aus einem homogenen dicken- und/oder werkstoffeinheitlichen Stahlblech gebildet ist.

13. Kraftfahrzeugbauteil nach einem der Ansprüche 1 bis 12, **dadurch gekennzeichnet, dass** der Basiskörper (2) einen Längenabschnitt aufweist, welcher einen im Wesentlichen U-förmigen oder V-förmigen Querschnitt besitzt mit einem Basissteg (20) und zwei Schenkeln (21, 22), wobei sich endseitig an die Schenkel (21, 22) Flansche (23, 24) anschließen.

14. Kraftfahrzeugbauteil nach Anspruch 13, **dadurch gekennzeichnet, dass** wenigstens ein Lochmuster (6) in zumindest einem Schenkel (21) vorgesehen ist.

15. Kraftfahrzeugbauteil nach Anspruch 13 oder 14, **dadurch gekennzeichnet, dass** wenigstens ein Lochmuster (6) im Bereich des Übergangs (25) vom Basissteg (20) zu einem Schenkel (21, 22) vorgesehen ist.

16. Kraftfahrzeugbauteil nach einem der Ansprüche 13 bis 15, **dadurch gekennzeichnet, dass** wenigstens ein Lochmuster (6) im Basissteg (20) vorgesehen ist.

17. Kraftfahrzeugbauteil nach einem der Ansprüche 12 bis 15, **dadurch gekennzeichnet, dass** wenigstens ein Lochmuster (6) in zumindest einem Flansch (23, 24) vorgesehen ist.

18. Kraftfahrzeugbauteil nach einem der Ansprüche 1 bis 17, **dadurch gekennzeichnet, dass** ein erstes Loch (7.1) und ein zum ersten Loch (7.1) benachbartes zweites Loch (7.2) in einem ersten Abstand (a1) zueinander angeordnet sind und das zweite Loch (7.2) und ein zum zweiten Loch (7.2) benachbartes drittes Loch (7.3) in einem zweiten Abstand (a2) zueinander angeordnet sind, wobei der erste Abstand (a1) und der zweite Abstand (a2) voneinander verschieden groß ist.

## Claims

1. Motor vehicle component (1) comprising a base body (2) made of a steel sheet, wherein the base body (2) has a surface section (3) provided with holes (7), **characterized in that** the surface section (3) has a tensile strength Rm of greater than or equal to 1,250 MPa and that a hole pattern (6) consisting of at least three holes (7) in the surface section (3) forms a deformation influence zone (8), wherein the area fraction of the holes (7) in the surface section (3) is between 7% and 60%, and the holes (7) have a diameter (d) of up to 30 mm.

2. Motor vehicle component according to claim 1, **characterized in that** the area fraction of the holes (7) in the surface section (3) is between 20% and 60%.

3. Motor vehicle component according to claim 1 or 2, **characterized in that** the hole pattern (6) comprises at least two holes (7) having different diameters (d1, d2).

4. Motor vehicle component according to one of claims 1 to 3, **characterized in that** two adjacent holes (7) are arranged at a distance (a) from one another, wherein the distance (a) is less than or equal to the hole diameter (d).

5. Motor vehicle component according to one of claims 1 to 4, **characterized in that** two adjacent holes (7) are arranged at a distance (a) of up to 50.0 mm from one another.

6. Motor vehicle component according to one of claims 1 to 5, **characterized in that** the hole pattern (6) is formed from at least two rows of holes (11, 12, 15, 16) which are spaced apart vertically and/or horizontally and extend in particular parallel to one another.

7. Motor vehicle component according to claim 6, **characterized in that** the holes (7) of one row of holes (11) are arranged in an offset manner with respect to the holes (7) of the other row of holes (12).

8. Motor vehicle component according to one of claims 1 to 7, **characterized in that** the hole pattern (6) encloses an unperforated region (17) of the surface section (3).

9. Motor vehicle component according to one of claims 1 to 8, **characterized in that** the base body (2) has at least one trimming edge (19), wherein the deformation influence zone (8) has a zone spacing (z) from the trimming edge (19) that corresponds at least to the diameter (d) of the smallest hole (7) in the deformation influence zone (8).

10. Motor vehicle component according to one of claims 1 to 9, **characterized in that** at least two surface sections (3) are provided, wherein each surface section (3) has a hole pattern (6) formed from holes (7).

11. Motor vehicle component according to claim 10, **characterized in that** different hole patterns (6) are provided in two surface sections (3) arranged at an axial distance from one another.

12. Motor vehicle component according to one of claims 1 to 11, **characterized in that** the base body (2) is formed from a homogeneous steel sheet of uniform thickness and/or uniform material.

13. Motor vehicle component according to one of claims 1 to 12, **characterized in that** the base body (2) has a longitudinal section which has a substantially U-shaped or V-shaped cross-section with a base web (20) and two legs (21, 22), wherein flanges (23, 24) adjoin the legs (21, 22) at their ends.

14. Motor vehicle component according to claim 13, **characterized in that** at least one hole pattern (6) is provided in at least one leg (21).

15. Motor vehicle component according to claim 13 or 14, **characterized in that** at least one hole pattern (6) is provided in the region of the transition (25) from the base web (20) to one of the legs (21, 22).

16. Motor vehicle component according to one of claims 13 to 15, **characterized in that** at least one hole pattern (6) is provided in the base web (20).

17. Motor vehicle component according to one of claims 12 to 15, **characterized in that** at least one hole pattern (6) is provided in at least one flange (23, 24).

18. Motor vehicle component according to one of claims 1 to 17, **characterized in that** a first hole (7.1) and a second hole (7.2) adjacent to the first hole (7.1) are arranged at a first distance (a1) from one another, and the second hole (7.2) and a third hole (7.3) adjacent to the second hole (7.2) are arranged at a second distance (a2) from one another, wherein the first distance (a1) and the second distance (a2) are different from each other.

## Revendications

1. Élément de véhicule automobile (1) comprenant un corps de base (2) en tôle d'acier, le corps de base (2) présentant une section de surface (3) pourvue de trous (7), **caractérisé en ce que** la section de surface (3) présente une résistance à la traction Rm supérieure ou égale à 1 250 MPa et **en ce qu'**un motif de trous (6) constitué d'au moins trois trous (7) dans la section de surface (3) forme une zone d'influence de déformation (8), la fraction surfacique des trous (7) dans la section de surface (3) étant comprise entre 7 % et 60 %, et les trous (7) ayant un diamètre (d) allant jusqu'à 30 mm.

2. Élément de véhicule automobile selon la revendication 1, **caractérisé en ce que** la fraction surfacique des trous (7) dans la section de surface (3) est comprise entre 20 % et 60 %.

3. Élément de véhicule automobile selon la revendication 1 ou 2, **caractérisé en ce que** le motif de trous (6) comprend au moins deux trous (7) ayant des diamètres différents (d1, d2).

4. Élément de véhicule automobile selon l'une des revendications 1 à 3, **caractérisé en ce que** deux trous adjacents (7) sont disposés à une distance (a) l'un de l'autre, ladite distance (a) étant inférieure ou égale au diamètre (d) du trou.

5. Élément de véhicule automobile selon l'une des revendications 1 à 4, **caractérisé en ce que** deux trous adjacents (7) sont disposés à une distance (a) pouvant atteindre 50,0 mm.

6. Élément de véhicule automobile selon l'une des revendications 1 à 5, **caractérisé en ce que** le motif de trous (6) est formé d'au moins deux rangées de trous (11, 12, 15, 16) espacées verticalement et/ou horizontalement et s'étendant en particulier parallèlement les unes aux autres.

7. Élément de véhicule automobile selon la revendication 6, **caractérisé en ce que** les trous (7) d'une rangée de trous (11) sont disposés de manière décalée par rapport aux trous (7) de l'autre rangée de trous (12).

8. Élément de véhicule automobile selon l'une des revendications 1 à 7, **caractérisé en ce que** le motif de trous (6) entoure une zone non perforée (17) de la section de surface (3).

9. Élément de véhicule automobile selon l'une des revendications 1 à 8, **caractérisé en ce que** le corps de base (2) présente au moins un bord de découpe (19), la zone d'influence de déformation (8) étant espacée du bord de découpe (19) d'une distance de zone (z) correspondant au moins au diamètre (d) du plus petit trou (7) de la zone d'influence de déformation (8).

10. Élément de véhicule automobile selon l'une des revendications 1 à 9, **caractérisé en ce qu'**au moins deux sections de surface (3) sont prévues, chaque section de surface (3) présentant un motif de trous (6) formé de trous (7).

11. Élément de véhicule automobile selon la revendication 10, **caractérisé en ce que** des motifs de trous (6) différents sont prévus dans deux sections de surface (3) disposées à une distance axiale l'une de l'autre.

12. Élément de véhicule automobile selon l'une des revendications 1 à 11, **caractérisé en ce que** le corps de base (2) est formé d'une tôle d'acier homogène d'épaisseur uniforme et/ou de matériau uniforme.

13. Élément de véhicule automobile selon l'une des revendications 1 à 12, **caractérisé en ce que** le corps de base (2) présente une section longitudinale ayant une section transversale sensiblement en forme de U ou de V, avec une âme de base (20) et deux branches (21, 22), des brides (23, 24) étant raccordées aux extrémités des branches (21, 22).

14. Élément de véhicule automobile selon la revendication 13, **caractérisé en ce qu'**au moins un motif de trous (6) est prévu dans au moins une branche (21).

15. Élément de véhicule automobile selon la revendication 13 ou 14, **caractérisé en ce qu'**au moins un motif de trous (6) est prévu dans la zone de transition (25) entre l'âme de base (20) et l'une des branches (21, 22).

16. Élément de véhicule automobile selon l'une des revendications 13 à 15, **caractérisé en ce qu'**au moins un motif de trous (6) est prévu dans l'âme de base (20).

17. Élément de véhicule automobile selon l'une des revendications 12 à 15, **caractérisé en ce qu'**au moins un motif de trous (6) est prévu dans au moins une bride (23, 24).

18. Élément de véhicule automobile selon l'une des revendications 1 à 17, **caractérisé en ce qu'**un premier trou (7.1) et un deuxième trou (7.2) adjacent au premier trou (7.1) sont disposés à une première distance (a1) l'un de l'autre, et que le deuxième trou (7.2) et un troisième trou (7.3) adjacent au deuxième trou (7.2) sont disposés à une deuxième distance (a2) l'un de l'autre, la première distance (a1) et la deuxième distance (a2) étant différentes.
